# EUROPEAN PATENT APPLICATION

(11) **EP 4 287 324 A1**
(43) Date of publication of application: **06.12.2023**
(21) Application number: 22745851.0
(22) Date of filing: 25.01.2022
(51) Int. Cl.: H01M 4/62, C08F 14/22, C08K 5/00, C08L 27/16, H01M 4/13

(54) **BINDER FOR NON-AQUEOUS ELECTROLYTE SECONDARY BATTERY, ELECTRODE MIXTURE, ELECTRODE, AND NON-AQUEOUS ELECTROLYTE SECONDARY BATTERY**

(30) Priority: 29.01.2021 JP 2021013550
(71) Applicant: Kureha Corporation, Chuo-ku Tokyo 103-8552 (JP)
(72) Inventor: SAITO, Haruki, Tokyo 103-8552 (JP); OKADA, Kayoko, Tokyo 103-8552 (JP); IKEYAMA, Yasufumi, Tokyo 103-8552 (JP); KATONO, Masataka, Tokyo 103-8552 (JP)
(74) Representative: Zimmermann & Partner Patentanwälte mbB
(86) International application number: PCT/JP2022/002610
(87) International publication number: WO 2022/163631

(57) **Abstract**

An object of the present application is to provide a binder for a non-aqueous electrolyte secondary battery having high adhesiveness to an active material and/or a current collector and also having high flexibility capable of withstanding bending in an electrode having a highly densified mixture layer. A binder for a non-aqueous electrolyte secondary battery, which achieves the object, contains: a vinylidene fluoride polymer having a vinylidene fluoride-derived structural unit as a main constituent component; and an additive having a specific structure, and a mass ratio of the vinylidene fluoride polymer to the additive is from 99/1 to 60/40:

## Description

### [TECHNICAL FIELD]

The present invention relates to a binder for a non-aqueous electrolyte secondary battery, an electrode mixture, an electrode, and a non-aqueous electrolyte secondary battery.

### [BACKGROUND ART]

Polyvinylidene fluoride (PVDF) is widely used as a binder in a mixture layer or the like of an electrode of a non-aqueous electrolyte secondary battery. From the perspective of improving the performance of the battery, the binder is required to have high adhesiveness to an active material and/or a current collector. For example, Patent Document 1 discloses that a binder composition containing: a vinylidene fluoride copolymer obtained by copolymerizing vinylidene fluoride and carboxyethyl acrylate or the like; and a non-aqueous solvent has excellent adhesiveness to a current collector.

In recent years, an electrode mixture layer has been highly densified to increase the energy density of a battery. Here, in order to increase the energy density of the battery, it is necessary to densely dispose, in a battery can body, an electrode having a highly densified mixture layer, and the electrode is required to be bendable into a desired shape. However, an electrode using a binder having excellent adhesiveness to an active material and/or a current collector has low flexibility, and, when an electrode having a highly densified mixture layer is bent, the mixture layer may be cracked or a current collector foil may be broken, resulting in breakage of the electrode.

Therefore, there have been studies to impart flexibility to the electrode. Patent Document 2 discloses that a compound having an enediol bond is added to a binder in a mixture layer.

### [Citation List]

### [Patent Document]

Patent Document 1: JP 5797206 B
Patent Document 2: JP 2005-294140 A

### [SUMMARY OF INVENTION]

### [Technical Problem]

However, even the electrode described in Patent Document 2 does not have sufficient flexibility yet. In addition, no attention has been paid to the high adhesiveness required of the binder.

The present invention has been made in view of the above issues. An object of the present invention is to provide a binder for a non-aqueous electrolyte secondary battery having both high adhesiveness to an active material and/or a current collector and high flexibility capable of withstanding bending in an electrode having a highly densified mixture layer.

### [Solution to Problem]

The present invention provides a binder for a non-aqueous electrolyte secondary battery, containing: a vinylidene fluoride polymer having a vinylidene fluoride-derived structural unit as a main constituent component; and one or more types of additives selected from compounds represented by the following general formula (A), wherein a mass ratio of the vinylidene fluoride polymer to the additives is from 99/1 to 60/40: 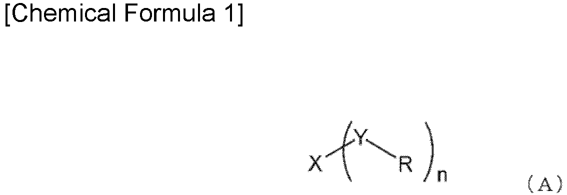 wherein X represents a di- to deca-valent atomic group containing one or more atoms or structures selected from the group consisting of an aromatic ring, a cycloalkane having a polar group, a sulfur atom, a nitrogen atom, and a phosphorus atom, and having a molecular weight of 300 or less, Y represents a divalent structure having an ether bond or an ester bond, bonded to X via the ether bond or the ester bond, and having a molecular weight of 200 or less, R represents an aliphatic hydrocarbon group having a main chain of 5 or greater and 15 or less carbon atoms, and n represents an integer of 2 or greater and 10 or less.

The present invention also provides an electrode mixture containing: the binder for a non-aqueous electrolyte secondary battery; and an electrode active material.

The present invention also provides an electrode including: a current collector; and a mixture layer provided on the current collector and containing the binder for a non-aqueous electrolyte secondary battery and an electrode active material.

The present invention also provides a non-aqueous electrolyte secondary battery including the electrode.

### [Advantageous Effects of Invention]

The binder for a non-aqueous electrolyte secondary battery of the present invention has high adhesiveness to an active material and/or a current collector, and an electrode containing the binder for a non-aqueous electrolyte secondary battery is hardly broken even when the electrode having a highly densified mixture layer is bent.

### [Description of Embodiments]

In the present specification, numerical ranges indicated by "to" refer to numerical ranges including the numerical values described before and after "to".

### 1. Binder for non-aqueous electrolyte secondary battery

The binder for a non-aqueous electrolyte secondary battery of the present invention (hereinafter also referred to as "binder") is suitable as a binder for a mixture layer or the like of an electrode of a non-aqueous electrolyte secondary battery. However, the intended use of the binder is not limited thereto.

As described above, the binder used in the mixture layer or the like of an electrode of a non-aqueous electrolyte secondary battery is required to have high adhesiveness to an active material and/or a current collector. On the other hand, when the adhesiveness of the binder is increased, the electrode is less likely to bend, and, when the electrode having a highly densified mixture layer is bent, the mixture layer may be cracked or the current collector may be broken, resulting in breakage of the electrode. That is, the adhesiveness of the binder to the active material and/or the current collector and the flexibility of the electrode were in a trade-off relationship. The reason for this can be conceived as follows. When the binder is firmly bound to the active material and/or the current collector, the current collector and the mixture layer are less likely to be peeled off. Such an electrode in which the materials are firmly bound to each other has low flexibility, and, when the electrode bends, a force is locally applied inside the electrode, and the electrode is easily broken. On the other hand, when the binding between the binder and the active material or the current collector is weak, the electrode is less likely to break at the time of bending, but the mixture layer is likely to peel off from the current collector. In either case, the performance of the non-aqueous electrolyte secondary battery deteriorates.

On the other hand, the binder of the present invention contains a vinylidene fluoride polymer having a vinylidene fluoride-derived structural unit as a main constituent component and one or more types of additives selected from compounds represented by the following general formula (A) at a predetermined ratio. 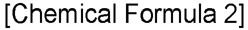 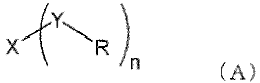 In the general formula (A), X represents a di- to deca-valent atomic group having a molecular weight of 300 or less, which contains an aromatic ring or the like. Y represents a divalent structure having a molecular weight of 200 or less, which is bonded to X via an ether bond or an ester bond. R represents an aliphatic hydrocarbon group having a main chain of 5 or more and 15 or less carbon atoms. n represents an integer of 2 or greater and 10 or less.

In the additive represented by the general formula (A), the portions represented by X and Y are polar or have a conjugated system, and the portion represented by R is non-polar. Such an additive also functions as a plasticizer for the vinylidene fluoride polymer. For example, when mixed with the vinylidene fluoride polymer, the additive is likely to enter between molecules of the vinylidene fluoride polymer, if the group represented by X is polar or has a conjugated system. Also, at this time, the group represented by R has an appropriate length, and thus an interval between the molecules of the vinylidene fluoride polymer is sufficiently widened, resulting in increase in flexibility of the vinylidene fluoride polymer. On the other hand, the additive also functions to increase adhesive strength between the binder and the active material or the current collector. The increase in flexibility of the vinylidene fluoride polymer improves elongation at break of the binder, resulting in relaxation of stress generated in the mixture layer and increase in adhesive strength between the binder and the active material or the current collector.

That is, the electrode having the mixture layer containing the binder of the present invention has high flexibility, and, for example, even when the density of the mixture layer is increased, the electrode is hardly broken at the time of bending. On the other hand, the adhesive strength between the binder and the active material or the current collector is high and peeling is less likely to occur. Therefore, excellent battery characteristics can be realized. Hereinafter, each of the components in the binder will be described.

### • Vinylidene fluoride polymer

The vinylidene fluoride polymer is a polymer having a vinylidene fluoride-derived structural unit as a main constituent component. The vinylidene fluoride polymer may be a homopolymer of vinylidene fluoride, or may include a homopolymer of vinylidene fluoride and a vinylidene fluoride polymer having a vinylidene fluoride-derived structural unit as a main constituent component. At this time, it may include only one type, or two or more types of vinylidene fluoride polymers having a vinylidene fluoride-derived structural unit as a main constituent component. In the present specification, "having a vinylidene fluoride-derived structural unit as a main constituent component" means that an amount of the vinylidene fluoride-derived structural unit is greater than 50 mass% relative to a mass of all structural units constituting the vinylidene fluoride polymer. The amount of the vinylidene fluoride-derived structural unit is preferably 80 mass% or greater, and more preferably 90 mass% or greater relative to the mass of all the structural units constituting the vinylidene fluoride polymer. When the amount of the vinylidene fluoride-derived structural unit in the vinylidene fluoride polymer is 90 mass% or greater, the physical properties of the vinylidene fluoride polymer easily fall within desired ranges, and the vinylidene fluoride polymer is easily bound to the active material and/or the current collector, and a conductive auxiliary. The amount of the vinylidene fluoride-derived structural unit can be determined by, for example, analysis by ¹⁹F-NMR or the like.

The vinylidene fluoride polymer may have a structural unit derived from a compound besides vinylidene fluoride (hereinafter also referred to as "another compound"). That is, the vinylidene fluoride polymer may be a copolymer of vinylidene fluoride and another compound. The type of another compound is not particularly limited, and examples thereof include an unsaturated dibasic acid, an unsaturated dibasic acid monoester, a halogenated alkyl vinyl compound, a compound represented by the following general formula (B-1), a compound represented by the following general formula (B-2), and a compound represented by the following general formula (B-3).

The unsaturated dibasic acid in the present specification is an unsaturated dicarboxylic acid or a derivative thereof. Examples of the unsaturated dibasic acid include compounds with two carboxyl groups bonded by a linear or branched unsaturated alkylene group having 1 or more and 6 or less carbon atoms. More specific examples of the unsaturated dibasic acid include maleic acid, fumaric acid, itaconic acid, and citraconic acid.

The unsaturated dibasic acid monoester is a monoester compound derived from the unsaturated dibasic acid. Examples of the unsaturated dibasic acid monoester include maleic acid monomethyl ester, maleic acid monoethyl ester, citraconic acid monomethyl ester, and citraconic acid monoethyl ester.

The halogenated alkyl vinyl compound in the present specification is a compound having one vinyl group and one or more halogenated alkyl groups, or a compound having one vinyl group and a halogen atom bonded to the vinyl group (provided that vinylidene fluoride is excluded). Examples of the halogenated alkyl vinyl compound include vinyl fluoride, trifluoroethylene, tetrafluoroethylene, chlorotrifluoroethylene, hexafluoropropylene, fluoroalkyl vinyl ether, and perfluoromethyl vinyl ether.

The general formula (B-1) will be shown below. 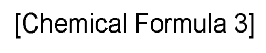 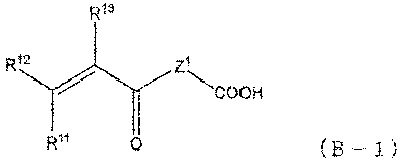 In the general formula (B-1), R¹¹, R¹², and R¹³ each independently represent a hydrogen atom, a fluorine atom, a chlorine atom, or an alkyl group having from 1 to 5 carbon atoms. However, it is preferable that steric hindrance occurs less frequently at the time of polymerization with vinylidene fluoride, and R¹¹ and R¹² are preferably hydrogen or an alkyl group having from 1 to 3 carbon atoms, and more preferably hydrogen or a methyl group. In particular, it is preferable that both R¹¹ and R¹² are hydrogen, or that only one of R¹¹ and R¹² is a methyl group.

Z¹ in the general formula (B-1) represents an atomic group having from 1 to 19 atoms in the main chain and a molecular weight of 472 or less. The molecular weight of the atomic group is preferably 14 or greater and 172 or less. The number of atoms in the main chain of Z¹ is preferably from 1 to 14 and more preferably from 1 to 9. The number of atoms in the main chain of Z¹ refers to the number of atoms in the longest chain among chains connecting an acryloyl group and a carboxyl group. The main chain of Z¹ may be a hydrocarbon chain, and may contain a nitrogen atom, a sulfur atom, an oxygen atom, or the like.

Examples of the compound represented by the general formula (B-1) include 2-carboxyethyl (meth)acrylate; (meth)acryloyloxyethyl succinate; (meth)acryloyloxypropyl succinate; (meth)acryloyloxyethyl phthalate; (meth)acrylamide-based compounds such as N-carboxyethyl (meth)acrylamide; thio (meth)acrylate compounds such as carboxyethylthio (meth)acrylate. In the present specification, (meth)acrylate refers to methacrylate, acrylate, or a mixture thereof, (meth)acryl refers to methacryl, acryl, or a mixture thereof, and (meth)acryloyl refers to methacryloyl, acryloyl, or a mixture thereof.

The general formula (B-2) will be shown below. 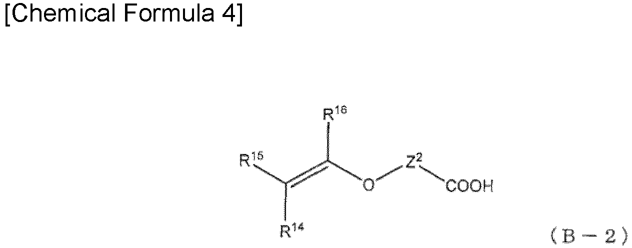 In the general formula (B-2), R¹⁴, R¹⁵, and R¹⁶ each independently represent a hydrogen atom, a fluorine atom, a chlorine atom, or an alkyl group having from 1 to 5 carbon atoms. However, it is preferable that steric hindrance occurs less frequently at the time of polymerization with vinylidene fluoride, and R¹⁴ and R¹⁵ are preferably hydrogen or an alkyl group having from 1 to 3 carbon atoms, and more preferably hydrogen or a methyl group. In particular, it is preferable that both R¹⁴ and R¹⁵ are hydrogen, or that only one of R¹⁴ and R¹⁵ is a methyl group.

Z² in the general formula (B-2) represents an atomic group having from 1 to 19 atoms in the main chain and a molecular weight of 484 or less. The molecular weight of the atomic group is preferably 14 or greater and 184 or less. The number of atoms in the main chain of Z² is preferably from 1 to 14 and more preferably from 1 to 9. The number of atoms in the main chain of Z² refers to the number of atoms in the longest chain among chains connecting oxygen bonded to a carbon-carbon double bond and a carboxyl group. The main chain of Z² may be a hydrocarbon chain, and may contain a nitrogen atom, a sulfur atom, an oxygen atom, or the like.

Examples of the compound represented by the general formula (B-2) include vinyl carboxyalkyl ethers such as vinyl carboxymethyl ether and vinyl carboxyethyl ether.

The general formula (B-3) will be shown below. 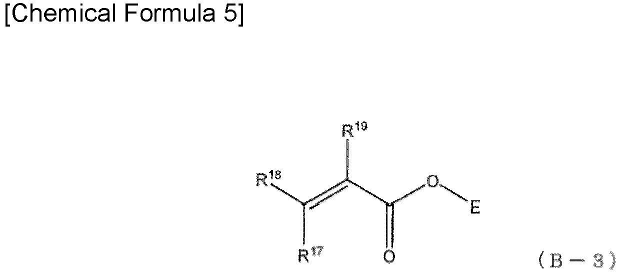 In the general formula (B-3), R¹⁷, R¹⁸, and R¹⁹ each independently represent a hydrogen atom, a fluorine atom, a chlorine atom, or an alkyl group having from 1 to 5 carbon atoms. However, it is preferable that steric hindrance occurs less frequently at the time of polymerization with vinylidene fluoride, and R¹⁷ and R¹⁸ are preferably hydrogen or an alkyl group having from 1 to 3 carbon atoms, and more preferably hydrogen or a methyl group. In particular, it is preferable that both R¹⁷ and R¹⁸ are hydrogen, or that only one of R¹⁷ and R¹⁸ is a methyl group.

E in the general formula (B-3) represents a hydrogen atom or a hydrocarbon group having from 1 to 5 carbon atoms and containing at least one hydroxy group. Examples of the hydrocarbon group containing a hydroxy group include a hydroxyethyl group and a hydroxypropyl group.

Examples of the compound represented by the general formula (B-3) include acrylic acid, methacrylic acid, 2-hydroxyethyl acrylate, 2-hydroxypropyl acrylate, 2-hydroxyethylmethyl acrylate, and 2-hydroxypropyl methacrylate.

The vinylidene fluoride polymer may contain only one type, or two or more types of another compound-derived structural units. As another compound, a structural unit derived from acrylic acid, 2-hydroxyethyl acrylate, acryloyloxyethyl succinate, or acryloyloxypropyl succinate, among the above ones, is preferable from the perspective of copolymerizability.

The amount of the another compound-derived structural unit is preferably 20 mass% or less, and more preferably 10 mass% or less, relative to the mass of all the structural units constituting the vinylidene fluoride polymer. When the amount of the another compound-derived structural unit in the vinylidene fluoride polymer falls within the above range, the physical properties of the vinylidene fluoride polymer easily fall within desired ranges, and the vinylidene fluoride polymer is easily bound to the active material and/or the current collector, and the conductive auxiliary.

The content of the structural unit derived from the compound in the vinylidene fluoride copolymer can be determined, for example, by analyzing the vinylidene fluoride copolymer by ¹⁹F-NMR or FT-IR.

A weight average molecular weight of the vinylidene fluoride polymer is preferably from 100000 to 10000000, more preferably from 200000 to 5000000, and still more preferably from 300000 to 2000000. When the weight average molecular weight of the vinylidene fluoride polymer falls within the above range, the physical properties of the vinylidene fluoride polymer easily fall within desired ranges, and the vinylidene fluoride polymer is easily bound to the active material and/or the current collector, and the conductive auxiliary. The weight average molecular weight is a value measured by gel permeation chromatography (GPC) calibrated with polystyrene.

### • Additive

The additive is a compound selected from compounds represented by the following general formula (A). The additive may contain only one type, or two or more types of the compounds represented by the following general formula (A). 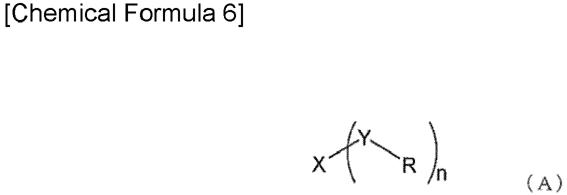 X in the general formula (A) represents a di- to deca-valent atomic group having a molecular weight of 300 or less, which contains one or more atoms or structures selected from the group consisting of an aromatic ring, a cycloalkane having a polar group, a sulfur atom, a nitrogen atom, and a phosphorus atom.

The atomic group containing an aromatic ring, which is represented by X, may contain only one aromatic ring or may contain a plurality of aromatic rings. When the atomic group has a plurality of aromatic rings, they may be bonded directly or via a linking group. Examples of the linking group for linking the aromatic rings include an alkyl group having 6 or less carbon atoms. Specific examples of the atomic group containing an aromatic ring include 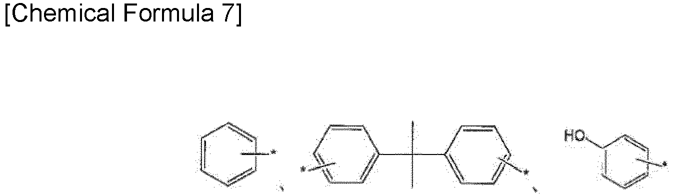 (wherein * represents a bond to the structure represented by Y), naphthalene, anthracene, biphenyl, and bibenzyl. In the above formula, only one bond is shown for each aromatic ring for convenience, but one aromatic ring may have a plurality of bonds.

The atomic group containing a cycloalkane having a polar group represented by X may contain only one cycloalkane having a polar group or may contain a plurality of cycloalkanes having a polar group. Examples of the polar group include a hydroxy group, a carboxyl group, and an epoxy group. When the atomic group includes a plurality of cycloalkanes each having a polar group, these cycloalkanes may be bonded to each other directly or through a linking group. The linking group for linking the cycloalkanes each having a polar group is the same as the linking group for linking the aromatic rings. Specific examples of the atomic group containing a cycloalkane having a polar group include 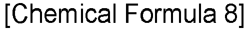 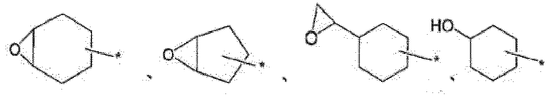 (wherein * represents a bond to the structure represented by Y), epoxycycloheptane, and epoxycyclooctane. In the above formula, only one bond is shown for convenience, but a plurality of bonds may be present.

Examples of the atomic group containing a sulfur atom, represented by X, include ethylene sulfide, thietane, dithietane, tetrahydrothiophene, and thiophene. Examples of the atomic group containing a nitrogen atom, represented by X, include azolidine, pyrrolidine, pyrrole, and pyrazole. Further, examples of the atomic group containing a phosphorus atom, represented by X, include 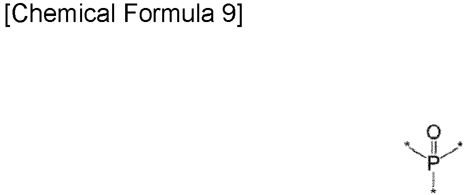 (wherein * represents a bond to the structure represented by Y), phosphirane, and phosphole. Although three bonds are shown in the above structural formula for convenience, the number of bonds is not limited to three.

Among the above, the atomic group represented by X in the general formula (A) is preferably a structure selected from the group consisting of: 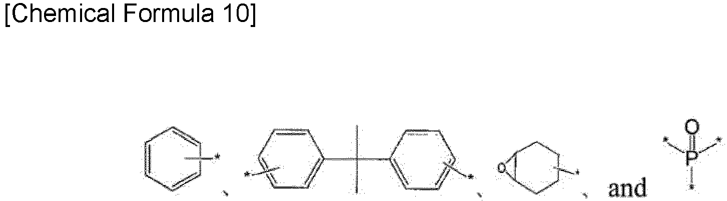 (wherein * represents a bond to the structure represented by Y, and the number thereof is not limited), and more preferably an aromatic ring or a bisphenol A-derived structure.

On the other hand, Y in the general formula (A) represents a divalent structure having a molecular weight of 200 or less, which is bonded to the X via an ether bond or an ester bond. The structure represented by Y is preferably bonded also to the group represented by R via an ether bond or an ester bond. Therefore, the structure represented by Y is preferably any divalent structure selected from the group consisting of an ester bond, an ether bond, a divalent structure having ester bonds at both terminals, a divalent structure having ether bonds at both terminals, and a divalent structure having an ester bond at one terminal and an ether bond at the other terminal.

Particularly, the structure represented by Y is more preferably a structure selected from the group consisting of: 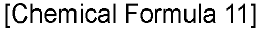 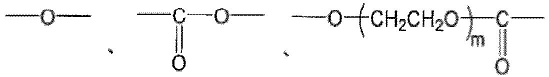 (wherein m represents an integer of 1 or greater and 3 or less).

On the other hand, in the general formula (A), R represents an aliphatic hydrocarbon group having a main chain of 5 or more and 15 or less carbon atoms. R may be composed only of a linear chain, may be composed only of a branched chain, or may be composed of a linear chain and a branched chain. When R is branched, the main chain of R represents the longest chain among alkyl chains constituting R. In addition, a plurality of Rs contained in one molecule may be constituted by aliphatic hydrocarbon groups each having the same number of carbon atoms or may be constituted by aliphatic hydrocarbon groups having different numbers of carbon atoms.

Examples of the aliphatic hydrocarbon group represented by R include a pentyl group, a hexyl group, a heptyl group, an octyl group, a nonyl group, a decyl group, a dodecyl group and an ethylhexyl group. Among them, an octyl group, a nonyl group, a decyl group, a dodecyl group, or an ethylhexyl group is preferable from the perspective of plasticization of the vinylidene fluoride polymer.

n in the general formula (A) represents an integer of 2 or greater and 10 or less, preferably 3 or greater and 6 or less.

Specific examples of the compound represented by the general formula (A) include compounds represented by the following general formulas (A-1) to (A-4). 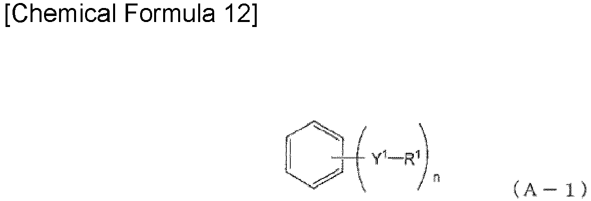 In the general formula (A-1), each Y¹ independently represents the same structure as Y in the above general formula (A), each R¹ independently represents the same aliphatic hydrocarbon group as R in the above general formula (A), and n represents an integer of 2 or greater and 6 or less. A plurality of R¹ may be the same aliphatic hydrocarbon groups as each other, or may be different aliphatic hydrocarbon groups from each other.

The compound represented by the general formula (A-1) is preferably a compound represented by the following general formula (a-1). 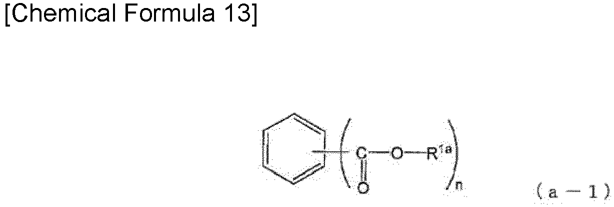 In the general formula (a-1), each R^{1a} independently represents the same aliphatic hydrocarbon group as R in the above general formula (A), and n represents an integer of 2 or greater and 6 or less. A plurality of R^{1a} may be the same aliphatic hydrocarbon groups as each other, or may be different aliphatic hydrocarbon groups from each other. 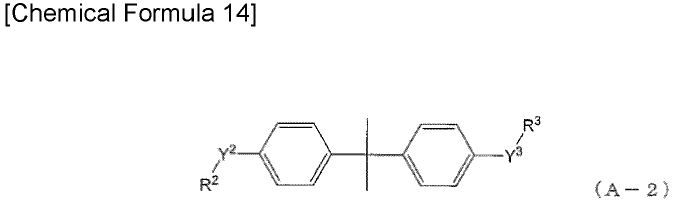 In the general formula (A-2), Y² and Y³ each independently represent the same structure as Y in the above general formula (A), and R² and R³ each independently represent the same aliphatic hydrocarbon group as R in the above general formula (A). R² and R³ may be the same aliphatic hydrocarbon groups as each other, or may be different aliphatic hydrocarbon groups from each other.

The compound represented by the general formula (A-2) is preferably a compound represented by the following general formula (a-2). 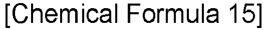 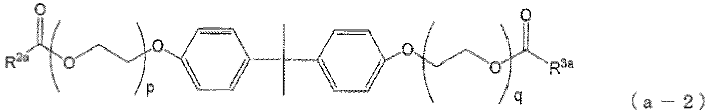 In the general formula (a-2), R^{2a} and R^{3a} each independently represent the same aliphatic hydrocarbon group as R in the above general formula (A), and p and q each independently represent an integer of from 1 to 3. R^{2a} and R^{3a} may be the same aliphatic hydrocarbon groups as each other, or may be different aliphatic hydrocarbon groups from each other. 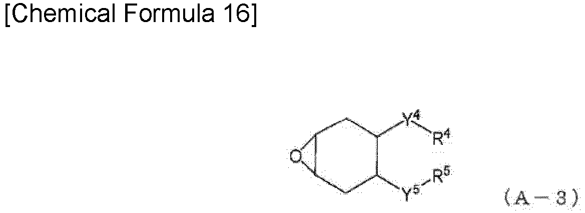 In the general formula (A-3), Y⁴ and Y⁵ each independently represent the same structure as Y in the above general formula (A), and R⁴ and R⁵ each independently represent the same aliphatic hydrocarbon group as R in the above general formula (A). R⁴ and R⁵ may be the same aliphatic hydrocarbon groups as each other, or may be different aliphatic hydrocarbon groups from each other.

The compound represented by the general formula (A-3) is preferably a compound represented by the following general formula (a-3). 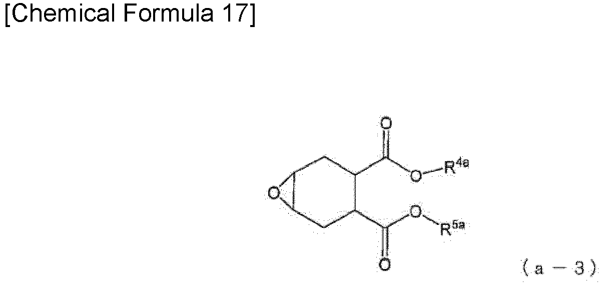 In the general formula (a-3), R^{4a} and R^{5a} each independently represent the same aliphatic hydrocarbon group as R in the above general formula (A). R^{4a} and R^{5a} may be the same aliphatic hydrocarbon groups as each other, or may be different aliphatic hydrocarbon groups from each other. 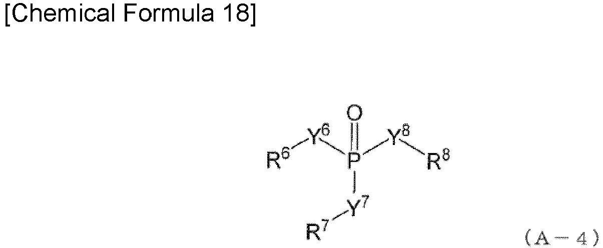 In the general formula (A-4), Y⁶ to Y⁸ each independently represent the same structure as Y in the above general formula (A), and R⁶ to R⁸ each independently represent the same aliphatic hydrocarbon group as R in the above general formula (A). R⁶ to R⁸ may be the same aliphatic hydrocarbon groups as each other, or may be different aliphatic hydrocarbon groups from each other.

The compound represented by the general formula (A-4) is preferably a compound represented by the following general formula (a-4). 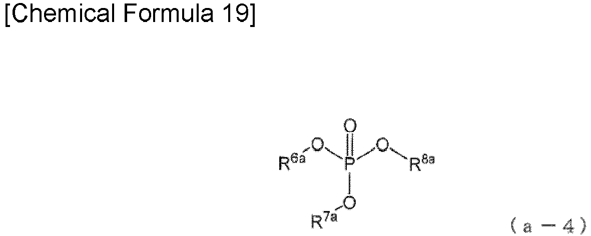 In the general formula (a-4), R^{6a} to R^{8a} each independently represent the same aliphatic hydrocarbon group as R in the above general formula (A). R^{6a} to R^{8a} may be the same aliphatic hydrocarbon groups as each other, or may be different aliphatic hydrocarbon groups from each other.

More specific compounds of the additive include tri-n-alkyl trimellitate (the number of carbon atoms in the main chain of the alkyl group is 5 or greater and 15 or less), triisoalkyl trimellitate (the number of carbon atoms in the main chain of the alkyl group is 5 or greater and 15 or less), tetra-n-alkyl pyromellitate (the number of carbon atoms in the main chain of the alkyl group is 5 or greater and 15 or less), tetraisoalkyl pyromellitate (the number of carbon atoms in the main chain of the alkyl group is 5 or greater and 15 or less), di-n-alkyl phthalate (the number of carbon atoms in the main chain of the alkyl group is 5 or greater and 15 or less), diisoalkyl phthalate (the number of carbon atoms in the main chain of the alkyl group is 5 or greater and 15 or less), polyoxyethylene bisphenol A lauric acid ester (the number of repetitions of the oxyethylene group is 1 or greater and 3 or less, respectively), tri-n-alkyl phosphate (the number of carbon atoms in the main chain of the alkyl group is 5 or greater and 15 or less), triisoalkyl phosphate (the number of carbon atoms in the main chain of the alkyl group is 5 or greater and 15 or less), epoxycyclohexane di-n-alkyl (the number of carbon atoms in the main chain of the alkyl group is 5 or greater and 15 or less), and epoxycyclohexane diisoalkyl (the number of carbon atoms in the main chain of the alkyl group is 5 or greater and 15 or less). Among them, tri-n-alkyl trimellitate (the number of carbon atoms in the main chain of the alkyl group is 5 or greater and 15 or less), tetra-n-alkyl pyromellitate (the number of carbon atoms in the main chain of the alkyl group is 5 or greater and 15 or less), diisononyl phthalate, bisphenol A ethylene glycol ether dilaurylate, di-2-ethylhexyl 4,5-epoxycyclohexane-1,2-dicarboxylate, and tri(2-ethylhexyl) phosphate are preferable from the perspective of improving the flexibility of the electrode using the binder and improving the adhesive strength to the active material and/or the current collector, upon addition.

The mass ratio of the vinylidene fluoride polymer to the total amount of the additives is preferably from 99/1 to 60/40, more preferably from 98/2 to 80/20, and still more preferably from 95/5 to 90/10. When the amount of the additive is the lower limit value or greater, the electrode using the binder becomes flexible, and breakage of the electrode is less likely to occur when the electrode is bent. On the other hand, when it is the upper limit value or less, high adhesive strength is easily obtained.

### • Others

The binder may contain a component besides the vinylidene fluoride polymer and the additive. Examples of the component besides those described above include a polyisocyanate-based compound having a blocked polyisocyanate group in which at least one isocyanate group is blocked (stabilized) with a blocking agent.

In the blocked isocyanate group, a blocking agent undergoes dissociation (deblocking) by heating, and isocyanate group is regenerated. From the perspective of improvement in adhesive strength of the binder to the active material and/or the current collector, 60 mol% or greater of all isocyanate groups are preferably blocked by the blocking agent, 80 mol% or greater of all isocyanate groups are more preferably blocked by the blocking agent, and all isocyanate groups of the polyisocyanate compound are particularly preferably blocked by the blocking agent.

The structure of the polyisocyanate-based compound is not particularly limited as long as the compound has a plurality of isocyanate groups, and examples thereof include multimers of at least one type of diisocyanate selected from the group consisting of aliphatic diisocyanates, alicyclic diisocyanates, and aromatic diisocyanates, in which at least some of the isocyanate groups are blocked with a blocking agent.

On the other hand, the blocking agent may have a structure which can be bonded to an isocyanate group and can be eliminated from the isocyanate group by heating or the like. Examples of the blocking agent include an oxime-based compound, an active methylene compound, a pyrazole-based compound, a mercaptan-based compound, an alcohol compound, an alkylphenol-based compound, a phenol-based compound, an acid amide-based compound, an acid imide-based compound, an imidazole-based compound, a urea-based compound, an amine-based compound, and an imide-based compound. These compounds can be the same compounds as known blocking agents.

Note that the blocking agent is preferably eliminated, for example, at a heating temperature when the mixture for an electrode containing the binder is applied onto the current collector, and dried. From these perspectives, the blocking agent is preferably an oxime compound, an active methylene compound, a pyrazole compound, or the like, and, among them, methyl ethyl ketoxime, dimethyl malonate, diethyl malonate, ethyl acetoacetate, 3,5-dimethylpyrazole, and pyrazole are preferable.

The amount of the polyisocyanate-based compound in the binder is not particularly limited, but the amount of the polyisocyanate-based compound is preferably 0.5 parts by mass or greater and 50 parts by mass or less, and more preferably 2 parts by mass or greater and 40 parts by mass or less with respect to 100 parts by mass of the vinylidene fluoride polymer. When the amount of the polyisocyanate-based compound is 2 parts by mass or greater, the adhesive strength of the binder to the active material and/or the current collector is increased. On the other hand, when the amount of the polyisocyanate-based compound is 40 parts by mass or less, the amounts of the vinylidene fluoride polymer and the additive are relatively increased, and the flexibility of the electrode is increased.

### • Method for preparing binder

The method for preparing the binder is not particularly limited, and the binder can be produced by preparing the vinylidene fluoride polymer and mixing the vinylidene fluoride polymer with the additive and another component described above.

The form of the binder is not particularly limited, and may be powder or liquid. The binder may contain a solvent, and may be dissolved in a solvent, or may be dispersed in a solvent.

The solvent may be a non-aqueous solvent or may be water. Examples of the non-aqueous solvent include N-methylpyrrolidone, N,N-dimethylformamide, N,N-dimethylacetamide, dimethylsulfoxide, hexamethylphosphoramide, dioxane, tetrahydrofuran, tetramethylurea, triethylphosphate, trimethylphosphate, acetone, methyl ethyl ketone, ethyl acetate, n-butyl acetate, n-butanol, dipropylene glycol monomethyl ether, propylene glycol monomethyl ether acetate, and cyclohexanone. These solvents may be used alone, or a mixture of two or more types thereof may be used.

### 2. Electrode mixture

The binder described above can be used in an electrode mixture containing the binder described above and an electrode active material. The electrode mixture may further contain a conductive auxiliary, a solvent, a dispersion medium, other additives, and the like.

The electrode active material contained in the electrode mixture is not particularly limited, and for example, a known active material for the negative electrode (negative electrode active material) or active material for the positive electrode (positive electrode active material) can be used.

Examples of the negative electrode active material include a carbon material, such as artificial graphite, natural graphite, non-graphitizable carbon, graphitizable carbon, activated carbon, and a material obtained by carbonizing a phenolic resin, a pitch, or the like by heat treatment; metal and metal alloy materials, such as Cu, Li, Mg, B, Al, Ga, In, Si, Ge, Sn, Pb, Sb, Bi, Cd, Ag, Zn, Hf, Zr, and Y; and metal oxides, such as GeO, GeO₂, SnO, SnO₂, PbO, and PbO₂. In addition, those in which a coating is applied to surfaces of the active materials are also included. Note that the negative electrode active material may be a commercially available product.

On the other hand, examples of the positive electrode active material include a lithium-based positive electrode active material containing lithium. Examples of the lithium-based positive electrode active material include: complex metal chalcogenide compounds represented by the general formula LiMY₂ (where M is at least one type of transition metal or two or more types of transition metals such as Co, Ni, Fe, Mn, Cr, or V, and Y is a chalcogen element such as O or S) such as LiCoO₂ or LiNiₓCo₁₋ₓO₂ (0 < x ≤ 1); complex metal oxides having a spinel structure such as LiMn₂O₄; and olivine-type lithium compounds such as LiFePO₄. In addition, those in which a coating is applied to surfaces of the active materials are also included. Note that the positive electrode active material may be a commercially available product.

The amount of the active material contained in the electrode mixture is appropriately selected depending on the type thereof, the function of the electrode, the type of the battery, and the like, and is not particularly limited. In one example, the amount is preferably 50 mass% or greater and 99.9 mass% or less relative to the total amount of the binder, the electrode active material, and the conductive auxiliary. When the content of the active material is in the range described above, a sufficient charge/discharge capacity can be obtained and good battery performance can be readily obtained, for example.

In addition, the conductive auxiliary is not particularly limited as long as it is a compound that can increase electrical conductivity between the electrode active materials or between the active material and the current collector. Examples of the conductive auxiliary include acetylene black, Ketjen Black, carbon black, graphite powder, carbon nanofibers, carbon nanotubes, and carbon fibers.

An amount of the conductive auxiliary contained in the electrode mixture is appropriately selected depending on the type thereof, the function of the electrode, the type of the battery, and the like, and is not particularly limited. Any amount can be set depending on the type thereof and the type of the battery. From the viewpoints of improving the conductivity and increasing the dispersibility of the conductive auxiliary, in one example, the amount of the conductive auxiliary is preferably 0.1 mass% or greater and 15 mass% or less, more preferably 0.1 mass% or greater and 7 mass% or less, and even more preferably 0.1 mass% or greater and 5 mass% or less relative to the total amount of the binder, the active material, and the conductive auxiliary.

The electrode mixture may contain a solvent or the like. The solvent is preferably a medium that can be removed by drying, and includes a polar solvent and an ionic liquid in addition to the nonpolar solvent and the low-polar solvent.

Examples of the solvent include amide compounds such as dimethylformamide, N, N-dimethylacetamide, and N-methylpyrrolidone; alcohols such as methanol, ethanol, isopropyl alcohol, 2-ethyl-1 hexanol, 1-nonanol, lauryl alcohol and tripropylene glycol; amine compounds such as o-toluidine, m-toluidine and p-toluidine; lactones such as γ-butyrolactone and δ-butyrolactone; sulfoxide-sulfone compounds such as dimethyl sulfoxide and sulfolane; and ionic liquids such as ethylmethylimidazolium salt, acetone, ethyl acetate, and butylmethylimidazolium salt.

The amount of the solvent in the electrode mixture is not particularly limited, but is preferably 20 parts by mass or greater and 150 parts by mass or less with respect to 100 parts by mass of the above-described active material.

The electrode mixture may further contain a dispersion medium, a dispersant, an adhesion assistant, a thickener, and the like, and known compounds can be used as these additives. The amounts of these additives are not particularly limited as long as the objects and effects of the present invention are not impaired. In one example, the amounts are preferably 15 mass% or less relative to the total amount of the active material and the binder.

The electrode mixture may further contain additives such as phosphorus compounds, sulfur compounds, organic acids, amine compounds, and nitrogen compounds such as ammonium compounds; organic esters, various silane-based, titanium-based, and aluminum-based coupling agents; vinylidene fluoride polymers other than the above-described vinylidene fluoride copolymers, and resins such as polytetrafluoroethylene (PTFE), styrenebutadiene rubber (SBR), and polyacrylonitrile (PAN). These additives are not particularly limited as long as the objects and effects of the present invention are not impaired. In one example, the amounts of these additives are preferably 15 mass% or less relative to the total amount of the active material and the binder.

The electrode mixture may be prepared by mixing all the components at once, or may be prepared by mixing some of the components first and then mixing the remaining components.

A viscosity of the electrode mixture is not particularly limited as long as it can prevent dripping, uneven application, and delay in drying after application when the electrode mixture is applied, thereby obtaining a mixture layer, and the operability of electrode preparation and the coatability are good. In one example, the viscosity of 0.1 Pa·s or greater and 100 Pa·s or less is preferable. The viscosity of the electrode mixture is measured by an E-type viscometer or the like.

### 3. Electrode

The electrode mixture described above can be used in the formation of mixture layers of electrodes of various non-aqueous electrolyte secondary batteries and the like. An electrode for a non-aqueous electrolyte secondary battery includes, for example, a current collector and a mixture layer disposed on the current collector. In this case, the electrode mixture described above can be used for the formation of the mixture layer. The electrode may be for a positive electrode or for a negative electrode.

### • Current collector

The current collectors for the negative and positive electrodes are terminals for collecting electricity. A material for each of the current collectors is not particularly limited, and metal foil, metal mesh, or the like of aluminum, copper, iron, stainless steel, steel, nickel, titanium, or the like can be used. In addition, the current collector may be one produced by applying the metal foil, metal mesh, or the like on a surface of a medium.

### • Mixture layer

The mixture layer is a layer obtained by applying the electrode mixture described above onto the current collector, and drying the electrode mixture. The mixture layer may be formed only on one surface of the current collector or may be formed on both surfaces.

The components of the mixture layer are appropriately selected depending on the type of the non-aqueous electrolyte secondary battery. The mixture layer may normally contain the binder and the active material described above, but may also contain various additives such as a conductive auxiliary, a dispersant, an adhesion assistant, and a thickener. These additives may be the same as those described for the electrode mixture.

Here, a thickness of the mixture layer is not particularly limited, but is preferably 1 µm or greater and 1000 µm or less in one example. A basis weight of the mixture layer formed on one surface of the current collector is not particularly limited, and may be any basis weight. In one example, the basis weight is preferably from 50 to 1000 g/m², and more preferably from 100 to 500 g/m².

### • Formation of mixture layer

The mixture layer can be formed by performing a step of applying the electrode mixture described above onto the current collector and a step of drying the electrode mixture.

The method of applying the electrode mixture is not particularly limited, and a doctor blade method, a reverse roll method, a comma bar method, a gravure method, an air knife method, a die coating method, a dip coating method, and the like can be employed.

After the application of the electrode mixture, the electrode mixture is heated at any temperature to dry the solvent (dispersion medium). In one example, a drying temperature is preferably 60°C or higher and 500°C or lower, and more preferably 80°C or higher and 200°C or lower. The drying may be performed multiple times at various temperatures. At this time, the drying may be performed under atmospheric pressure, increased pressure, or reduced pressure. After the drying, a heat treatment may be further performed. When the binder contains a polyisocyanate-based compound having a blocked polyisocyanate group, drying or heat treatment is preferably carried out at a temperature equal to or higher than a deblocking temperature of the blocking agent.

After the application and drying of the electrode mixture, press treatment may be further performed. Performing the press treatment can increase the electrode density. In one example, a pressing pressure is preferably 1 kPa or greater and 10 GPa or less.

### 4. Non-aqueous electrolyte secondary battery

As described above, the binder and the electrode mixture can be used in electrodes of various non-aqueous electrolyte secondary batteries and the like, but may be used for the formation of other layers of the non-aqueous electrolyte secondary battery.

### Examples

Hereinafter, specific examples of the present invention will be described together with comparative examples, but the present invention is not limited to these.

### [Example 1]

### • Preparation of vinylidene fluoride polymer A

An autoclave with an internal volume of 2 liters was charged with 1096 g of ion-exchanged water, 0.2 g of Metolose (trade name) 90SH-100 (available from Shin-Etsu Chemical Co., Ltd.), 2.2 g of a 50 mass% diisopropyl peroxydicarbonate-HCFC 225cb solution, 426 g of vinylidene fluoride (hereinafter also referred to as "VDF"), and an initial addition amount of 0.2 g of acryloyloxy propyl succinate (hereinafter also referred to as "APS"). The temperature was raised to 26°C and then maintained at 26°C, and a 6 mass% APS aqueous solution was gradually added at a rate of 0.5 g/min. APS was added in a total amount of 4.0 g including the initially added amount. The resulting polymer slurry of the VDF/APS copolymer was dehydrated, washed with water/dehydrated, and then dried at 80°C for 20 hours, and a polymer powder (vinylidene fluoride polymer A) was obtained. The weight average molecular weight of the vinylidene fluoride polymer was 800000.

### • Preparation of binder

Ninety (90) parts by mass of the vinylidene fluoride polymer A was mixed with 10 parts by mass of tri-n-alkyl trimellitate (hereinafter also referred to as "TATM") shown below. 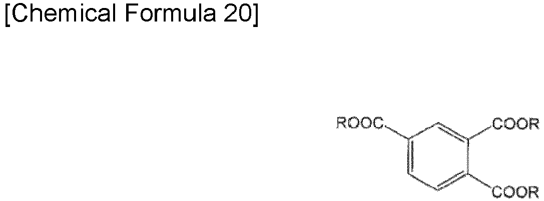 wherein each R independently represents an alkyl group having 8 carbon atoms or an alkyl group having 10 carbon atoms.

### [Example 2]

A binder was prepared in the same manner as in Example 1 except that the additive used in the preparation of the binder was changed from TATM to the following tetra-n-alkyl pyromellitate (hereinafter also referred to as "TAPM"). 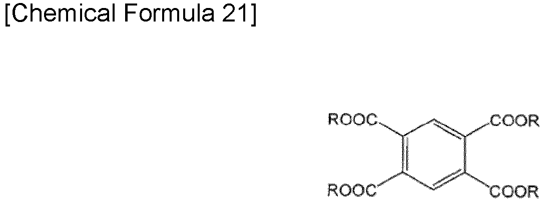 wherein R represents an alkyl group having 8 carbon atoms or an alkyl group having 10 carbon atoms.

### [Example 3]

A binder was prepared in the same manner as in Example 1 except that the additive used in the preparation of the binder was changed from TATM to diisononyl phthalate (hereinafter also referred to as "DINP") shown below. 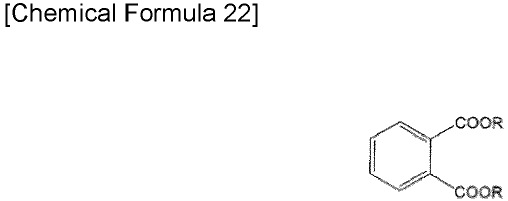 wherein each R represents a nonyl group.

### [Example 4]

A binder was prepared in the same manner as in Example 1 except that the additive used in the preparation of the binder was changed from TATM to bisphenol A ethylene glycol ether dilaurylate (hereinafter also referred to as "BPDL") shown below. 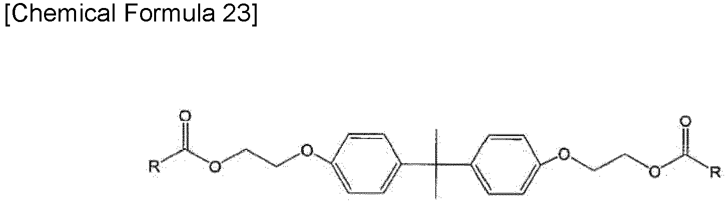 wherein each R represents a lauryl group.

### [Example 5]

A binder was prepared in the same manner as in Example 1 except that the additive used in the preparation of the binder was changed from TATM to di-2-ethylhexyl 4,5-epoxycyclohexane-1,2-dicarboxylate (hereinafter also referred to as "EDOCH") shown below. 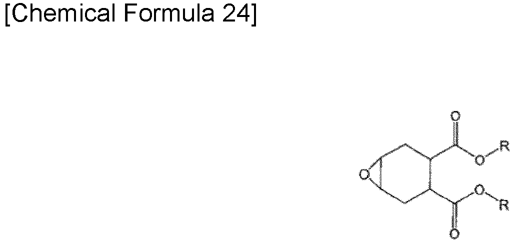 wherein each R represents a 2-ethylhexyl group.

### [Example 6]

A binder was prepared in the same manner as in Example 1 except that the additive used in the preparation of the binder was changed from TATM to tri(2-ethylhexyl) phosphate (hereinafter also referred to as "TOF") shown below. 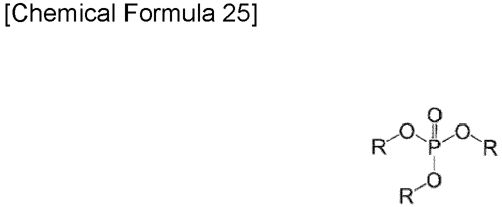 wherein each R represents a 2-ethylhexyl group.

### [Comparative Example 1]

The vinylidene fluoride polymer A was used as a binder, without addition of an additive.

### [Comparative Example 2]

A binder was prepared in the same manner as in Example 1 except that the additive used in the preparation of the binder was changed from TATM to dodecylbenzene (hereinafter also referred to as "DDB"). 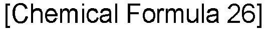 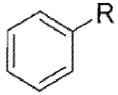 wherein R represents a dodecyl group.

### [Comparative Example 3]

A binder was prepared in the same manner as in Example 1 except that the additive used in the preparation of the binder was changed from TATM to hexyl benzoate (hereinafter also referred to as "HB") shown below. 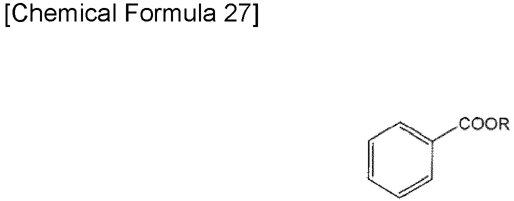 wherein R represents a hexyl group.

### [Comparative Example 4]

A binder was prepared in the same manner as in Example 1 except that the additives used for preparing the binder were changed from TATM shown below to bis(2-ethylhexyl) azelate (hereinafter also referred to as "DOZ"). 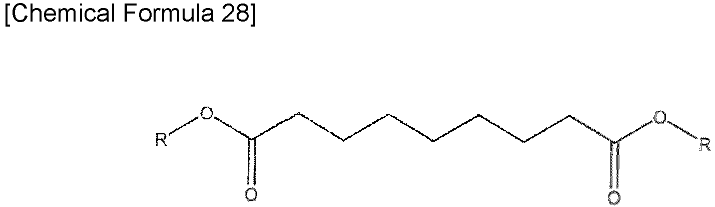 wherein each R represents a 2-ethylhexyl group.

### [Comparative Example 5]

A binder was prepared in the same manner as in Example 1 except that the additive used in the preparation of the binder was changed from TATM to bis(2-ethylhexyl) adipate (hereinafter also referred to as "DOA") shown below. 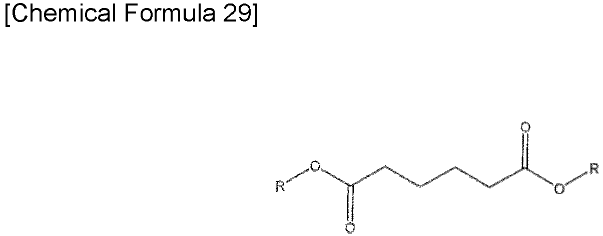 wherein each R represents a 2-ethylhexyl group.

### [Comparative Example 6]

A binder was prepared in the same manner as in Example 1 except that the additive used in the preparation of the binder was changed from TATM to dibutyl phthalate (hereinafter also referred to as "DBP"). 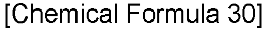 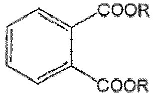 wherein each R represents a butyl group.

### [Comparative Example 7]

A binder was prepared in the same manner as in Example 1 except that the additive used in the preparation of the binder was changed from TATM to tributyl trimellitate (hereinafter also referred to as "TBTM"). 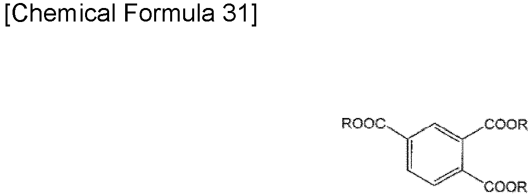 wherein each R represents a butyl group.

### [Example 7]

A binder was obtained in the same manner as in Example 1 except that 98 parts by mass of the vinylidene fluoride polymer A and 2 parts by mass of TATM were mixed in the preparation of the binder.

### [Example 8]

A binder was obtained in the same manner as in Example 1 except that 95 parts by mass of the vinylidene fluoride polymer A and 5 parts by mass of TATM were mixed in the preparation of the binder.

### [Example 9]

A binder was obtained in the same manner as in Example 1 except that 80 parts by mass of the vinylidene fluoride polymer A and 20 parts by mass of TATM were mixed in the preparation of the binder.

### [Comparative Example 8]

A binder was obtained in the same manner as in Example 1 except that 50 parts by mass of the vinylidene fluoride polymer A and 50 parts by mass of TATM were mixed in the preparation of the binder.

### [Example 10]

### • Preparation of vinylidene fluoride polymer B

An autoclave with an internal capacity of 2 liters was charged with 1075 g of ion-exchanged water, 0.4 g of methyl cellulose, 420 g of vinylidene fluoride, and 1.9 g of diisopropyl peroxydicarbonate, and the mixture was subjected to suspension polymerization at 25°C to obtain a slurry of a vinylidene fluoride homopolymer. The resulting polymer slurry was dehydrated, washed with water/dehydrated, and then dried at 80°C for 20 hours, and a polymer powder (vinylidene fluoride polymer B) was obtained. The weight average molecular weight of the vinylidene fluoride polymer was 1100000.

### • Preparation of binder

Ninety (90) parts by mass of the vinylidene fluoride polymer B and TATM10 parts by mass were mixed to obtain a binder.

### [Comparative Example 9]

The vinylidene fluoride polymer B was used as a binder, without addition of an additive.

### Example 11

### •Preparation of vinylidene fluoride polymer C

An autoclave with an internal capacity of 2 liters was charged with 1040 g of ion-exchanged water, 0.8 g of methyl cellulose, 4 g of diisopropyl peroxydicarbonate, 2.5 g of ethyl acetate, 395 g of vinylidene fluoride, and 4 g of maleic acid monomethyl ester (hereinafter also referred to as "MMM"), and the mixture was subjected to suspension polymerization at 28°C to obtain a polymer slurry of a vinylidene fluoride copolymer (VDF/MMM). The resulting polymer slurry was dehydrated, washed with water/dehydrated, and then dried at 80°C for 20 hours, and a polymer powder (vinylidene fluoride polymer C) was obtained. The weight average molecular weight of the vinylidene fluoride polymer was 300000.

### • Preparation of binder

Ninety (90) parts by mass of the vinylidene fluoride polymer C and TATM10 parts by mass were mixed to obtain a binder.

### [Comparative Example 10]

The vinylidene fluoride polymer C was used as a binder, without addition of an additive.

### Example 12

### • Preparation of vinylidene fluoride polymer D

An autoclave with an internal volume of 2 liters was charged with 900 g of ion-exchanged water, 0.4 g of Metolose (trade name) 90SH-100 (available from Shin-Etsu Chemical Co., Ltd.), 4 g of a 50 wt.% perbutyl perpivalate-HCFC 225cb solution, 396 g of vinylidene fluoride, and an initial addition amount of 0.2 g of acrylic acid (hereinafter also referred to as "AA"). After the temperature was raised to 50°C, a 3 wt.% AA aqueous solution was continuously supplied to a reactor under conditions of maintaining a constant pressure during polymerization. AA was added in a total amount of 1.96 g including the initially added amount. The resulting polymer slurry of the vinylidene fluoride copolymer (VDF/AA) was dehydrated, washed with water/dehydrated, and then dried at 80°C for 20 hours, and a polymer powder (vinylidene fluoride polymer D) was obtained. The weight average molecular weight of the vinylidene fluoride polymer was 800000.

### • Preparation of binder

Ninety (90) parts by mass of the vinylidene fluoride polymer D and TATM10 parts by mass were mixed to obtain a binder.

### [Comparative Example 11]

The vinylidene fluoride polymer D was used as a binder, without addition of an additive.

### Example 13

### • Preparation of vinylidene fluoride polymer E

A commercially available vinylidene fluoride polymer E (available from Solvay S.A., product name Solef5130, vinylidene fluoride as a main component) was prepared.

### • Preparation of binder

Ninety (90) parts by mass of the vinylidene fluoride polymer E and TATM10 parts by mass were mixed to obtain a binder.

### [Comparative Example 12]

The vinylidene fluoride polymer E was used as a binder, without addition of an additive.

### Example 14

### • Preparation of binder

Eighty one (81) parts by mass of the vinylidene fluoride polymer A, 9 parts by mass of blocked polyisocyanate (BPNCO, Duranate (trade name) TPA-B80E available from Asahi Kasei Chemicals Corporation), and 10 parts by mass of TATM were mixed to obtain a binder.

### Comparative Example 13

A binder was obtained in the same manner as in Example 14, except that TATM was not added in the preparation of the binder.

### [Evaluation]

### • Evaluation of molecular weight by GPC

The molecular weight of the vinylidene fluoride polymer was measured as a weight average molecular weight calibrated with polystyrene, using gel permeation chromatography (available from JASCO Corporation, GPC-900, shodex KD-806M column) in a N-methylpyrrolidone (hereinafer also referred to as "NMP") solution in which the vinylidene fluoride polymer was dissolved at a concentration of 0.1 wt.%.

### • Preparation of binder solution

6.5 parts by mass of each of the binders described above were added to 93.5 parts by mass of NMP, and the mixture was stirred with a magnetic stirrer to prepare binder solutions corresponding to Examples and Comparative Examples described above.

### • Production of electrode

Twenty three (23) parts by mass of the binder solution, 100 parts by mass of a positive electrode active material LiCoO₂ (lithium cobalt oxide) (hereinafter also referred to as "LCO"), 2 parts by mass of Super-P (available from Imerys Graphite & Carbon) as a conductive auxiliary, and 13 parts by mass of NMP were mixed to prepare an electrode mixture. The electrode mixture was applied to one side or both sides of an aluminum foil and dried to obtain an electrode. Hereinafter, an electrode obtained by applying the electrode mixture to both sides of the aluminum foil is referred to as double-side coated electrode, and an electrode obtained by applying the electrode mixture to only one side of the aluminum foil is referred to as one-side coated electrode.

### • Calculation of electrode density

The electrode density was determined by the following measurement method. The double-side coated electrode and a current collector were each cut out into 50 mm in length and 20 mm in width, and their weights were measured with an electronic balance. The weight of the positive electrode mixture layer was calculated from the difference between the obtained electrode weight and the obtained current collector weight. The thicknesses of the double-side coated electrode and the current collector were each measured at five points with a micrometer. The difference between the obtained electrode thickness average value and the obtained current collector thickness average value was taken as the thickness of the positive electrode mixture layer, and this thickness of the positive electrode mixture layer was multiplied by the electrode area to calculate the volume of the positive electrode mixture layer. The electrode density of the positive electrode mixture layer was calculated by dividing the mixture layer weight of the positive electrode mixture layer by the obtained volume of the positive electrode mixture layer.

### • Measurement of electrode density at break

The double-side coated electrode cut out into 50 mm in length and 20 mm in width was pressed with a roll press machine to adjust the electrode density as appropriate, and used as a measurement sample. A tensile tester (UNIVERSAL TESTING INSTRUMENT MODEL: STB-1225, available from Orientec Co., Ltd.) was used to bend the measurement sample at a head speed of 30 mm/min, and a compression test was performed. The bent part of the measurement sample was opened, and breakage was determined based on the presence or absence of transmission of light from the back. The minimum electrode density at which breakage occurred was taken as electrode density at break, and used as an index of electrode flexibility. In addition, evaluation was performed on the basis of the following criteria in terms of ratio to the electrode density at break of a comparative example containing no additive. A higher electrode density at break than that of a comparative example means more excellent electrode flexibility. Examples 1 to 9 and Comparative Examples 2 to 8 were compared with Comparative Example 1. Example 10 was compared with Comparative Example 9, Example 11 was compared with Comparative Example 10, Example 12 was compared with Comparative Example 11, Example 13 was compared with Comparative Example 12, and Example 14 was compared with Comparative Example 13.
⊚: The electrode density at break was 3% or greater relative to that of the comparative example.
○: The electrode density at break was 1 % or greater and less than 3% relative to that of the comparative example.
×: The electrode density at break was less than 1% relative to that of the comparative example.

### • Measurement of peel strength

The one-side coated electrode cut out into 50 mm in length and 20 mm in width was used as a measurement sample. A 90 degree peel test was conducted in accordance with JIS K 6854-1 using a tensile tester (Universal Testing Instrument Model: STB-1225, available from Orientec Co., Ltd.) at a head speed of 10 mm/min to measure the peel strength (gf/mm). In addition, evaluation was performed on the basis of the following criteria in terms of ratio to the peel strength of a comparative example containing no additive. Examples 1 to 9 and Comparative Examples 2 to 8 were compared with Comparative Example 1. Example 10 was compared with Comparative Example 9, Example 11 was compared with Comparative Example 10, Example 12 was compared with Comparative Example 11, Example 13 was compared with Comparative Example 12, and Example 14 was compared with Comparative Example 13.
○: The decrease in peel strength was within 15% relative to that of the comparative example.
×: The decrease in peel strength was 15% or greater relative to that of the comparative example.

**[Table 1]**

| | Active material type | Vinylidene fluoride polymer | | Additive | | Others | | Electrode density at break | | Peel strength | |
|---|---|---|---|---|---|---|---|---|---|---|---|
| | | Type | Added amount (part by mass) | Type | Added amount (part by mass) | Type | Added amount (part by mass) | g/cm³ | Evaluation | gf/mm | Evaluation |
| Example 1 | LCO | A | 90 | TATM | 10 | - | - | 4.21 | ⊚ | 2.68 | ○ |
| Example 2 | LCO | A | 90 | TAPM | 10 | - | - | 4.19 | ⊚ | 3.12 | ○ |
| Example 3 | LCO | A | 90 | DINP | 10 | - | - | 4.12 | ⊚ | 2.89 | ○ |
| Example 4 | LCO | A | 90 | BPDL | 10 | - | - | 4.12 | ⊚ | 2.79 | ○ |
| Example 5 | LCO | A | 90 | EDOCH | 10 | - | - | 4.12 | ⊚ | 2.24 | ○ |
| Example 6 | LCO | A | 90 | TOF | 10 | - | - | 4.07 | ○ | 2.56 | ○ |
| Comparative Example 1 | LCO | A | 100 | - | - | - | - | 4.00 | - | 2.58 | - |
| Comparative Example 2 | LCO | A | 90 | DDB | 10 | - | - | 3.97 | × | 1.99 | × |
| Comparative Example 3 | LCO | A | 90 | HB | 10 | - | - | 4.01 | × | 1.62 | × |
| Comparative Example 4 | LCO | A | 90 | DOZ | 10 | - | - | 4.06 | ○ | 2.20 | × |
| Comparative Example 5 | LCO | A | 90 | DOA | 10 | - | - | 4.14 | ⊚ | 2.01 | × |
| Comparative Example 6 | LCO | A | 90 | DBP | 10 | - | - | 4.12 | ⊚ | 1.93 | × |
| Comparative Example 7 | LCO | A | 90 | TBTM | 10 | - | - | 4.05 | ○ | 2.18 | × |
| Example 7 | LCO | A | 98 | TATM | 2 | - | - | 4.07 | ○ | 2.57 | ○ |
| Example 8 | LCO | A | 95 | TATM | 5 | - | - | 4.15 | ⊚ | 2.79 | ○ |
| Example 9 | LCO | A | 80 | TATM | 20 | - | - | 4.32 | ⊚ | 2.39 | ○ |
| Comparative Example 8 | LCO | A | 50 | TATM | 50 | - | - | 4.44 | ⊚ | 0.99 | × |
| Example 10 | LCO | B | 90 | TATM | 10 | - | - | 4.33 | ⊚ | 1.36 | ○ |
| Comparative Example 9 | LCO | B | 100 | - | - | - | - | 4.15 | - | 1.47 | - |
| Example 11 | LCO | C | 90 | TATM | 10 | - | - | 4.30 | ○ | 0.58 | ○ |
| Comparative Example 10 | LCO | C | 100 | - | - | - | - | 4.19 | - | 0.53 | - |
| Example 12 | LCO | D | 90 | TATM | 10 | - | - | 4.20 | ○ | 2.25 | ○ |
| Comparative Example 11 | LCO | D | 100 | - | - | - | - | 4.00 | - | 2.51 | - |
| Example 13 | LCO | E | 90 | TATM | 10 | - | - | 4.15 | ○ | 2.67 | ○ |
| Comparative Example 12 | LCO | E | 100 | - | - | - | - | 4.04 | - | 2.61 | - |
| Example 14 | LCO | A | 81 | TATM | 10 | BPNCO | 9 | 4.10 | ⊚ | 5.73 | ○ |
| Comparative Example 13 | LCO | A | 90 | - | - | BPNCO | 10 | 3.88 | - | 6.15 | - |

As shown in Table 1, when the mass ratio of the vinylidene fluoride polymer to the additive having a predetermined structure was from 99/1 to 60/40 (Examples 1 to 9), the electrode density at break was increased and the peel strength was sufficiently high in all the cases, as compared with Comparative Example 1 in which no additive was added. Contrary to this, for example, when there was no group corresponding to X in the general formula (A) (Comparative Examples 4 and 5), the peel strength was low. On the other hand, when there was no group corresponding to Y (Comparative Example 2) and when there was only one atomic group represented by Y-R (Comparative Example 3), both the electrode density at break and the peel strength were low. In addition, when the number of carbon atoms of the alkyl group (R) of the additive was small though there was a group corresponding to X (Comparative Examples 6 and 7), the electrode density at break was increased, but the peel strength was low because of insufficient plasticization of the vinylidene fluoride polymer. On the other hand, when the amount of the additive was too large (Comparative Example 8), the electrode flexibility was high and the electrode density at break could be increased, but the peel strength was decreased.

In addition, when the mass ratio of the vinylidene fluoride polymer to the additive having a predetermined structure was from 99/1 to 60/40 though the type of the vinylidene fluoride polymer was changed (Examples 10 to 13), the electrode density at break was increased and the peel strength was further sufficiently high in all the cases, as compared with Comparative Examples 9 to 12.

In Example 14 in which the blocked polyisocyanate was added, the peel strength was very high. Also in this case, the electrode density at break was increased and the peel strength was sufficiently high, as compared with Comparative Example 13 in which no additive was added.

### [Example 15]

6.5 parts by mass of the binder prepared in Example 1 were added to 93.5 parts by mass of NMP, and the mixture was stirred with a magnetic stirrer to prepare binder solutions. Mixed were 30.8 parts by mass of the binder solution, 100 parts by mass of Li_{1.0}Ni_{0.85}Co_{0.1}Al_{0.05}O₂ (hereinafter also referred to as "NCA") as an active material, 2 parts by mass of Super-P (available from Imerys Graphite & Carbon) as a conductive auxiliary, and 5.8 parts by mass of NMP to prepare an electrode mixture. The resulting electrode mixture was applied onto an aluminum foil and dried to obtain an electrode.
With respect to the electrode, the electrode density at break and the peel strength of the mixture layer were measured in the same manner as described above. The electrode density at break and the peel strength were evaluated on the basis of the following Comparative Example 14.

### Comparative Example 14

An electrode was formed in the same manner as in Example 15 except that TATM was not added in the preparation of the binder. With respect to the electrode, the electrode density at break and the peel strength of the mixture layer were measured in the same manner as described above.

### [Example 16]

8.5 parts by mass of the binder prepared in Example 10 were added to 91.5 parts by mass of NMP, and the mixture was stirred with a magnetic stirrer to prepare binder solutions. Mixed were 47.6 parts by mass of the binder solution, 100 parts by mass of LiFePO₄ (lithium iron phosphate) (hereinafter also referred to as "LFP") as an active material, 3 parts by mass of Super-P (available from Imerys Graphite & Carbon) as a conductive auxiliary, and 103 parts by mass of NMP to prepare an electrode mixture. The resulting electrode mixture was applied onto an aluminum foil and dried to obtain an electrode. With respect to the electrode, the electrode density at break and the peel strength of the mixture layer were measured in the same manner as described above. The electrode density at break and the peel strength were evaluated on the basis of the following Comparative Example 15.

### Comparative Example 15

An electrode was formed in the same manner as in Example 16 except that TATM was not added in the preparation of the binder. With respect to the electrode, the electrode density at break and the peel strength of the mixture layer were measured in the same manner as described above.

### [Example 17]

6.5 parts by mass of the binder prepared in Example 1 were added to 93.5 parts by mass of NMP, and the mixture was stirred with a magnetic stirrer to prepare binder solutions. Mixed were 30.8 parts by mass of the binder solution, 100 parts by mass of Li_{1.00}Ni_{0.8}Co_{0.1}Mn_{0.1}O₂ (hereinafter also referred to as "NCM") as an active material, 2 parts by mass of Super-P (available from Imerys Graphite & Carbon) as a conductive auxiliary, and 5.8 parts by mass of NMP to obtain an electrode mixture. The resulting electrode mixture was applied onto an aluminum foil and dried to obtain an electrode. With respect to the electrode, the electrode density at break and the peel strength of the mixture layer were measured in the same manner as described above. The electrode density at break and the peel strength were evaluated on the basis of the following Comparative Example 16.

### Comparative Example 16

An electrode was formed in the same manner as in Example 17 except that TATM was not added in the preparation of the binder. With respect to the electrode, the electrode density at break and the peel strength of the mixture layer were measured in the same manner as described above.

**[Table 2]**

| | Active material type | Vinylidene fluoride polymer | | Additive | | Others | | Electrode density at break | | Peel strength | |
|---|---|---|---|---|---|---|---|---|---|---|---|
| | | Type | Added amount (part by mass) | Type | Added amount (part by mass) | Type | Added amount (part by mass) | g/cm³ | Evaluation | gf/mm | Evaluation |
| Example 15 | NCA | A | 90 | TATM | 10 | - | - | 3.51 | ⊚ | 10.3 | ○ |
| Comparative Example 14 | NCA | A | 100 | - | - | - | - | 3.16 | - | 11.7 | - |
| Example 16 | LFP | B | 90 | TATM | 10 | - | - | 2.45 | ○ | 0.60 | ○ |
| Comparative Example 15 | LFP | B | 100 | - | - | - | - | 2.32 | - | 0.64 | - |
| Example 17 | NCM | A | 90 | TATM | 10 | - | - | 3.45 | ⊚ | 7.45 | ○ |
| Comparative Example 16 | NCM | A | 100 | - | - | - | - | 3.09 | - | 7.79 | - |

As shown in Table 2, when the mass ratio of the vinylidene fluoride polymer to the additive having a predetermined structure was from 99/1 to 60/40 though the active material was changed (Examples 15 to 17), the electrode density at break was increased and the peel strength was further sufficiently high in all the cases, as compared with Comparative Examples 14 to 16 in which no additive was added.

The present application claims priority from the Japanese patent application No. 2021-013550 filed on January 29, 2021. The contents described in the specification of this application are all incorporated in the specification of the present application.

### [Industrial Applicability]

According to the binder for a non-aqueous electrolyte secondary battery of the present invention, it is possible to provide an electrode having both high adhesiveness and high flexibility capable of withstanding bending in an electrode having a highly densified mixture layer.

## Claims

1. A binder for a non-aqueous electrolyte secondary battery, comprising:
a vinylidene fluoride polymer having a vinylidene fluoride-derived structural unit as a main constituent component; and
one or more types of additives selected from compounds represented by the general formula (A),
wherein a mass ratio of the vinylidene fluoride polymer to the additives is from 99/1 to 60/40: 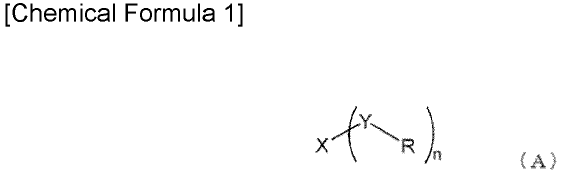 wherein
X represents a di- to deca-valent atomic group containing one or more atoms or structures selected from the group consisting of an aromatic ring, a cycloalkane having a polar group, a sulfur atom, a nitrogen atom, and a phosphorus atom, and having a molecular weight of 300 or less,
Y represents a divalent structure containing an ether bond or an ester bond, bonded to X via the ether bond or the ester bond, and having a molecular weight of 200 or less,
R represents an aliphatic hydrocarbon group having a main chain of 5 or greater and 15 or less carbon atoms, and
n represents an integer of 2 or greater and 10 or less.

2. The binder for a non-aqueous electrolyte secondary battery according to claim 1, wherein
Y in the general formula (A) is any divalent structure selected from the group consisting of an ester bond, an ether bond, a divalent structure having ester bonds at both terminals, a divalent structure having ether bonds at both terminals, and a divalent structure having an ester bond at one terminal and an ether bond at the other terminal.

3. The binder for a non-aqueous electrolyte secondary battery according to claim 2, wherein
Y in the general formula (A) is any structure selected from the group consisting of an ether bond, an ester bond, and 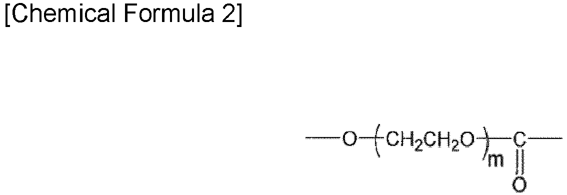
(wherein m represents an integer of 1 or greater and 3 or less).

4. The binder for a non-aqueous electrolyte secondary battery according to claim 1, wherein, in the general formula (A), X contains an aromatic ring or a cycloalkane having a polar group, and Y has an ester bond.

5. The binder for a non-aqueous electrolyte secondary battery according to claim 1, wherein
the compound represented by the general formula (A) is a compound represented by any of the general formulas (A-1) to (A-3): 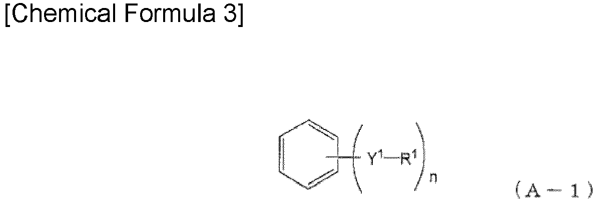 wherein
each Y¹ independently represents the same structure as Y in the general formula (A),
each R¹ independently represents the same aliphatic hydrocarbon group as R in the general formula (A), and
n represents an integer of 2 or greater and 6 or less; 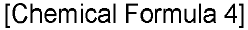 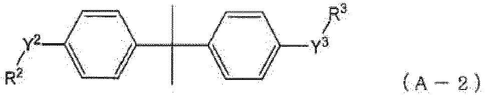 wherein
Y² and Y³ each independently represent the same structure as Y in the general formula (A), and
R² and R³ each independently represent the same aliphatic hydrocarbon group as R in the general formula (A); and 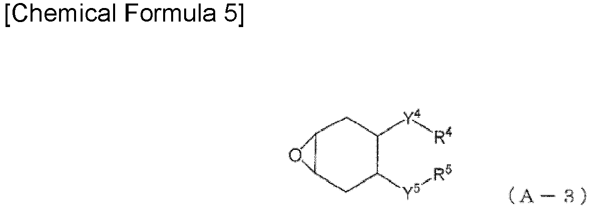 wherein
Y⁴ and Y⁵ each independently represent the same structure as Y in the general formula (A), and
R⁴ and R⁵ each independently represent the same aliphatic hydrocarbon group as R in the general formula (A).

6. The binder for a non-aqueous electrolyte secondary battery according to claim 5, wherein
the compound represented by the general formula (A) is a compound represented by any of the general formulae (a-1) to (a-3): 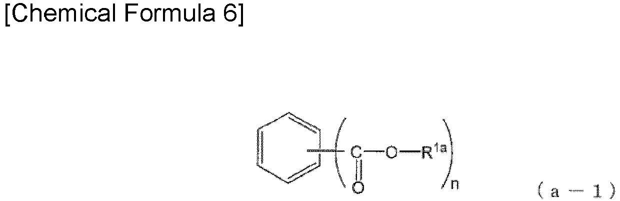 wherein
each R^{1a} independently represents the same aliphatic hydrocarbon group as R in the general formula (A), and
n represents an integer of 2 or greater and 6 or less; 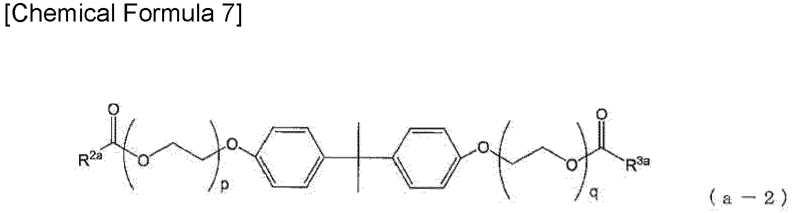 wherein
R^{2a} and R^{3a} each independently represent the same aliphatic hydrocarbon group as R in the general formula (A), and
p and q each independently represent an integer of from 1 to 3; and 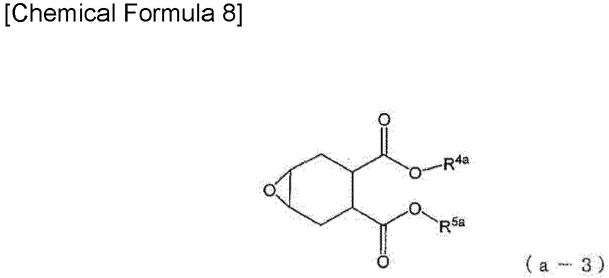 wherein R^{4a} and R^{5a} each independently represent the same aliphatic hydrocarbon group as R in the general formula (A).

7. The binder for a non-aqueous electrolyte secondary battery according to any one of claims 1 to 3, wherein
the compound represented by the general formula (A) is a compound represented by the general formula (A-4): 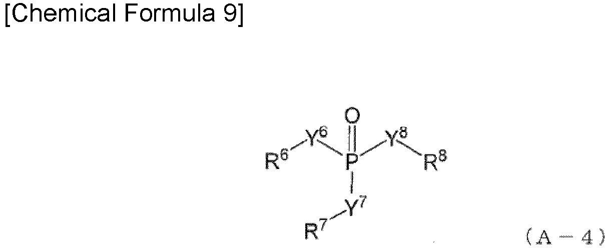 wherein
Y⁶ to Y⁸ each independently represent the same structure as Y in the general formula (A), and
R⁶ to R⁸ each independently represent the same aliphatic hydrocarbon group as R in the general formula (A).

8. The binder for a non-aqueous electrolyte secondary battery according to claim 7, wherein
the compound represented by the general formula (A) is a compound represented by the general formula (a-4): 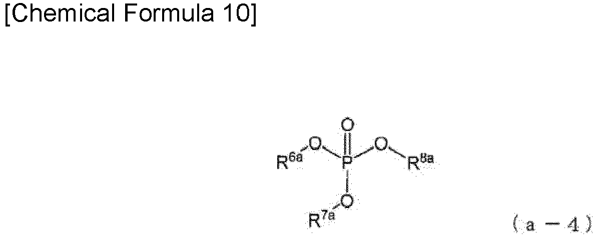 wherein
R^{6a} to R^{8a} each independently represent the same aliphatic hydrocarbon group as R in the general formula (A).

9. The binder for a non-aqueous electrolyte secondary battery according to any one of claims 1 to 8, further comprising a polyisocyanate-based compound in which at least some of isocyanate groups are blocked with a blocking agent.

10. The binder for a non-aqueous electrolyte secondary battery according to any one of claims 1 to 9, wherein
the vinylidene fluoride polymer comprises a polymer of:
vinylidene fluoride; and
at least one compound selected from the group consisting of an unsaturated dibasic acid, an unsaturated dibasic acid monoester, a halogenated alkyl vinyl compound, a compound represented by the general formula (B-1), a compound represented by the general formula (B-2), and a compound represented by the general formula (B-3): 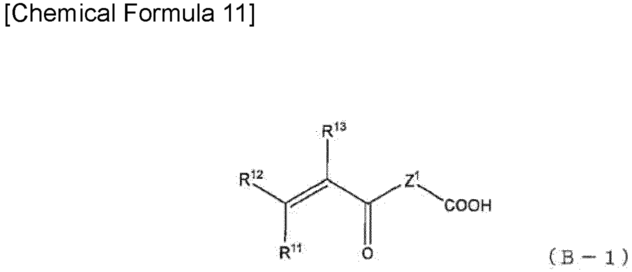 wherein
R¹¹, R¹², and R¹³ each independently represent a hydrogen atom, a fluorine atom, a chlorine atom, or an alkyl group having from 1 to 5 carbon atoms, and
Z¹ represents an atomic group having from 1 to 19 atoms in the main chain and a molecular weight of 472 or less; 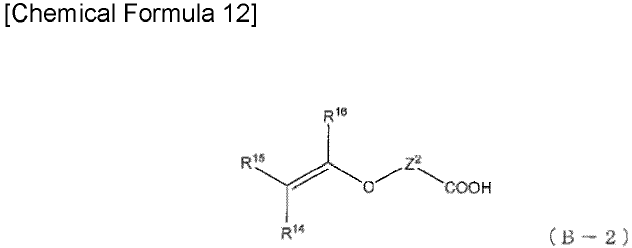 wherein
R¹⁴, R¹⁵, and R¹⁶ each independently represent a hydrogen atom, a fluorine atom, a chlorine atom, or an alkyl group having from 1 to 5 carbon atoms, and
Z² represents an atomic group having from 1 to 19 atoms in the main chain and a molecular weight of 484 or less; and 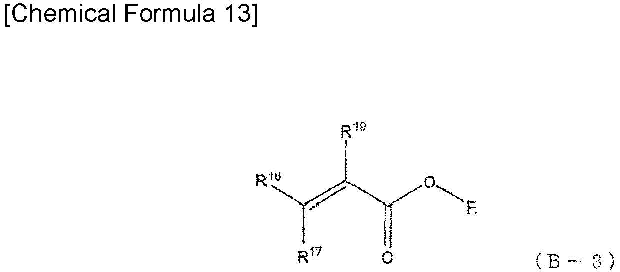 wherein
R¹⁷, R¹⁸, and R¹⁹ each independently represent a hydrogen atom, a fluorine atom, a chlorine atom, or an alkyl group having from 1 to 5 carbon atoms, and
E represents a hydrogen atom or a hydrocarbon group having from 1 to 5 carbon atoms which may have a hydroxy group.

11. An electrode mixture comprising:
the binder for a non-aqueous electrolyte secondary battery described in any one of claims 1 to 10; and
an electrode active material.

12. An electrode comprising:
a current collector; and
a mixture layer provided on the current collector and containing the binder for a non-aqueous electrolyte secondary battery described in any one of claims 1 to 10 and an electrode active material.

13. A non-aqueous electrolyte secondary battery comprising:
the electrode described in claim 12.
